Europäisches Patentamt

European Patent Office

Office européen des brevets

(19)

(11) Veröffentlichungsnummer: **0 092 745**
**B1**

(12) **EUROPÄISCHE PATENTSCHRIFT**

(45) Veröffentlichungstag der Patentschrift:
17.09.86

(51) Int. Cl.⁴: **B 29 C 59/04**

(21) Anmeldenummer: **83103640.5**

(22) Anmeldetag: **14.04.83**

(54) **Vorrichtung zum Prägen der Oberfläche von Profilstäben.**

(30) Priorität: **23.04.82 DE 3215175**

(43) Veröffentlichungstag der Anmeldung:
**02.11.83 Patentblatt 83/44**

(45) Bekanntmachung des Hinweises auf die Patenterteilung:
**17.09.86 Patentblatt 86/38**

(84) Benannte Vertragsstaaten:
**AT BE CH DE FR GB IT LI LU NL SE**

(56) Entgegenhaltungen:
**EP - A - 0 015 312
DE - A - 1 814 720
GB - A - 2 065 028
US - A - 2 075 735**

(73) Patentinhaber: **Gebrüder Kömmerling Kunststoffwerke GmbH, Zweibrückerstrasse 200, D-6780 Pirmasens (DE)**

(72) Erfinder: **Blaum, Franz, Fabrikstrasse 31, D-6781 Lemberg (DE)**

(74) Vertreter: **Sandmair, Kurt, Dr. et al, Patentanwälte Schwabe, Sandmair, Marx Stuntzstrasse 16, D-8000 München 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zum Prägen der Oberfläche von Stabmaterial aus thermoplastischem Kunststoff in warmplastischem Zustand, gemäss dem Oberbegriff des Anspruchs 1.

Eine solche Vorrichtung ist durch die EP-A 0 015 312 bekannt, in welcher vorgeschlagen ist, in die einer Extrusionsdüse nachgeschaltete Kalibriervorrichtung gemeinsam mit dem extrudierten Hohlprofilstrang ein flexibles Band einlaufen zu lassen, welches seinerseits die Negativform eines anzustrebenden Prägemusters trägt.

Versuche haben jedoch ergeben, dass ein luftundurchlässiges Musterband praktisch keinerlei Prägung hinterlässt, während es bei Verwendung eines luftdurchlässigen Musterbandes, das aus Metallgewebe oder dergleichen ausgeführt ist, praktisch unvermeidlich ist, dass sich nicht nur die gewünschte Oberflächenstruktur, sondern auch die Gewebestruktur des das Muster tragenden Gewebes in der Oberfläche des Hohlprofilstabes abbildet. Hierbei wird besonders bei dünnwandigen Profilstäben deren Masshaltigkeit beeinträchtigt.

Ausgehend von diesem Stand der Technik liegt der Erfindung die Aufgabe zugrunde, die bekannte Vorrichtung dahingehend weiterzubilden, dass sie bei den insbesondere dünnwandigen Profilstäben eine feinere und sauberere Prägung erzielt, ohne die Masshaltigkeit des Profilstabes in irgendeiner Weise zu beeinträchtigen.

Diese Aufgabe wird durch die Merkmale des Anspruchs 1 gelöst, wobei zum Einbringen der Prägung eine Prägewalze verwendet wird, die in einem Fenster in der Wand der Führung für den noch warmplastischen Hohlprofilstab angeordnet ist, und zwar derart, dass sie im wesentlichen sich innerhalb einer Vakuumkammer befindet, die jenseits des Fensters angeordnet ist, und nur so weit durch das Fenster hindurchragt, dass sie mit der Aussenoberfläche in einem die Prägung bewirkenden Ausmass in Eingriff gelangen kann.

Hierbei entsteht eine einer Linienberührung stark ähnelnde Flächenberührung mit nur sehr geringer Erstreckung in Förderrichtung des Hohlprofilstabes.

Die Grösse des Fensters und die Grösse und Anordnung der Walze sind so aufeinander abgestimmt, dass zwischen Walzenumfang und Fenster ein Spalt geschaffen ist, der seinerseits so dimensioniert ist, dass er zwar das Material des Hohlprofilstabes kräftig ansaugt, aber so schmal ist, dass dieses Material nicht eingesaugt werden kann.

Es ist zwar an sich bereits bekannt (GB-A 2 065 028), in eine weiche Kunststofffolie eine Oberflächenstruktur einzuwalzen, wobei die verwendete Walze eine strukturierte, luftdurchlässige Aussenoberfläche aufweist, doch ist es dabei erforderlich, die Folie über die Strukturwalze mit einem erheblichen Umschlingungswinkel herumzuführen, was naturgemäss mit einem Kunststoff-Profilstab, selbst wenn er sich noch in thermoplastischem Zustand befindet, nicht ohne dessen unerwünschte Verformung stattfinden könnte.

Bevorzugt befindet sich die Walze in einer Unterdruckkammer. Soweit zusätzlich oder ausschliesslich Luft durch die Prägeoberfläche der Prägewalze hindurchgesaugt werden soll, kann die Walze als Hohlwalze ausgebildet und über eine Hohlwelle an eine Unterdruckquelle angeschlossen sein. Vorteilhaft ist aber auch eine derartige Prägewalze in einem an die Kalibrierdüse angrenzenden Vakuumkasten angeordnet. Hierbei muss die Umfangsfläche der Walze porös sein. Sie kann zu diesem Zweck aus porösem Sintermetall bestehen.

Ein derartiges, hinlänglich poröses Material mit feiner Porenstruktur liefert die zum Erzeugen einer Saugwirkung erforderliche Luftdurchlässigkeit über die gesamte Prägeoberfläche hinweg. Infolge der hohen Viskosität und Elastizität des Materials der Profilstäbe kann dieses dennoch nicht in die Poren eindringen und diese verstopfen.

Die hier in Frage kommenden, meist hohlen Profilstäbe haben bisweilen auch nicht-ebene Sichtflächen, welche mit einer Prägestruktur versehen werden sollen. Es hat sich herausgestellt, dass auch derartige Oberflächen durch eine erfindungsgemässe Prägewalze geprägt werden können, wenn deren Prägeoberfläche eine der genannten, nicht-ebenen Profilstab-Oberfläche entsprechende Krümmung bzw. Ausbildung aufweist, sofern diese Krümmung nicht zu stark ist. Eine derartige Prägewalze hat eine Prägeoberfläche mit unterschiedlichen Radien, welche an diesen Stellen dementsprechend auch unterschiedliche Umfangsgeschwindigkeiten aufweist. Im Gegensatz hierzu hat der Profilstab an allen seinen Oberflächenelementen stets die gleiche Translationsgeschwindigkeit. Es tritt daher zwangsläufig zwischen einzelnen Oberflächenelementen der Prägeoberfläche der Prägewalze einerseits und gegenüberliegenden Oberflächenabschnitten des Profilstabes andererseits eine Verschiebung bzw. Friktion auf. Es hat sich gezeigt, dass bis zu einem gewissen Masse diese Friktion von dem noch weichen Material des Profilstabes aufgenommen und ausgeglichen wird, ohne dass deshalb die Qualität der Prägung beeinträchtigt wird. Es ist diese Friktion allenfalls bei der Gestaltung des Prägemusters in der Prägeoberfläche der Prägewalze zu berücksichtigen.

Auch hierbei bewirkt die Saugwirkung, dass das Material des Profilstabes satt gegen die gekrümmte Prägeoberfläche herangezogen wird, so dass eine saubere Prägung erzielt wird. Es ist im Prinzip möglich und gegebenenfalls sogar vorteilhaft, die Prägewalze mit einem Antrieb zu versehen, welcher dafür sorgt, dass ihre Umfangsgeschwindigkeit möglichst genau der Translationsgeschwindigkeit des Profilstabes entspricht.

Da, wie oben erwähnt, ein gewisser Schlupf ohne weiteres vom Material des Profilstabes aufgenommen wird, ohne dass dieser in seiner Masshaltigkeit eine Einbusse erleidet oder die Deutlichkeit und Klarheit des Prägemusters verlorengeht, ist es gemäss einer weiteren Ausgestaltung der Erfindung besonders von Vorteil, dass die Walze antriebslos frei drehbar gelagert ist, wobei die Lagerung innerhalb eines Vakuumkastens oder der Vakuumkammer einer Vakuum-Kalibrierdüse angeordnet sein kann. Diese Massnahme erleichtert die Abdichtung der Walze gegenüber der Umgebungsluft und verhindert das Auftreten von Leckstellen, welche die Ausübung eines stets völlig gleichmässigen Saug-Unterdrucks beeinträchtigen und stören könnten.

Der Gegenstand der Erfindung ist anhand der beigefügten, schematischen Zeichnung beispielsweise noch näher erläutert. In der Zeichnung ist:

Fig. 1 ein Längsschnitt durch eine Kalibrierdüse, in Förderrichtung des zu kalibrierenden Hohl-Profilstabs;

Fig. 2 der Querschnitt II–II durch die Kalibrierdüse der Fig. 1;

Fig. 3 eine Darstellung ähnlich Fig. 1, jedoch durch eine für einen anderen Hohl-Profilstab eingerichtete Kalibrierdüse, und

Fig. 4 der Querschnitt IV–IV durch die Kalibrierdüse der Fig. 3.

In allen Figuren sind durchgehend für gleichartige Elemente die gleichen Bezugszeichen verwendet; soweit bei einer Figur solche Elemente nicht eigens angesprochen werden, wird ausdrücklich auf die Abhandlung im Zusammenhang mit anderen Figuren verwiesen.

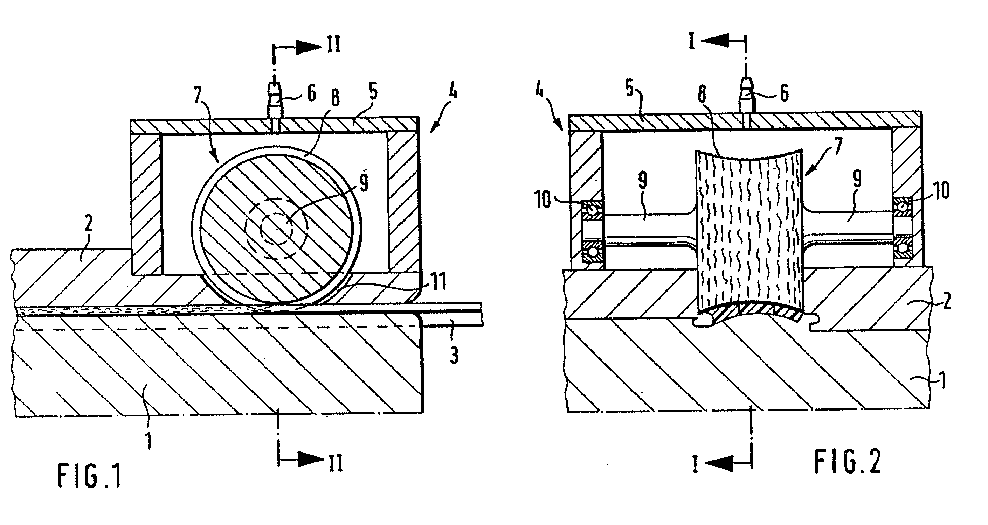

In Fig. 1 und 2 ist eine Kalibrierdüse gezeigt, wobei Fig. 1 einen Schnitt längs Linie I–I in Fig. 2 und Fig. 2 einen Schnitt längs Linie II–II in Fig. 1 darstellt.

Die Kalibrierdüse ist aus einem Kalibrierdüsenunterteil 1 und einem passend auf diesem aufgesetzten Kalibrierdüsen-Oberteil 2 gebildet, zwischen welchen ein Kalibrierkanal gebildet ist, der von einem Hohlprofil 3 – im Beispiel einem Rollachsenstab – durchlaufen wird, das sich in Pfeilrichtung, also in Fig. 1 von rechts nach links, bewegt. Rechts neben der Darstellung in Fig. 1 ist die Extrudierdüse angeordnet (nicht dargestellt), in welcher das Hohlprofil 3 geformt wird. Unmittelbar nach dem Verlassen der Extrudierdüse gelangt dann das Hohlprofil 3 in den Einlauf der Kalibrierdüse 1, 2, und zwar in noch plastischem bzw. verformbarem Zustand.

Die Kalibrierdüse 1, 2 ist in nicht dargestellter Weise als Vakuumkalibrierdüse ausgebildet.

Das Hohlprofil ist aus thermoplastischem Material gebildet, welches beim Passieren der Kalibrierdüse 1, 2 unter gleichzeitiger Kalibrierung abgekühlt wird und sich verfestigt. Es ist aber auch möglich, dass andere Materialien verwendet werden, deren Erhärtung und Verfestigung nach anderen Prinzipien erfolgt, solange der Hohlprofilstab 3 die Kalibrierdüse 1, 2 passiert.

Am Einlauf, also der rechten Seite der Kalibrierdüse 1, 2 in Fig. 1, ist die Oberseite des Kalibrierdüsen-Oberteils 2 ausgespart, und in dieser Aussparung ist ein Vakuumkasten 4 aufgesetzt, welcher von rechtwinklig zur Förderrichtung (Pfeil) angeordneten Seitenwänden und einer parallel zur Förderrichtung verlaufenden Abdeckung 5 gebildet ist.

Die Abdeckung 5 ist auf die Seitenwände derart aufgesetzt, und diese sind ihrerseits auf das Kalibrierdüsen-Oberteil 2 derart aufgesetzt, dass der Vakuumkasten 4 luftdicht verschlossen ist.

Die Abdeckung 5 weist mittig eine Durchgangsbohrung auf, in welche dichtend ein Anschlussnippel 6 für den Anschluss an die Saugleitung eingesetzt ist, welche mit einer Unterdruckquelle verbunden ist, mittels welcher es möglich ist, das Innere des Vakuumkastens 4 bei einem bestimmten Unterdruck zu halten.

In den Seitenwänden des Vakuumkastens 4 sind bevorzugt wartungsfreie Lager 10 eingearbeitet, in welchen die Endstummel einer Welle 9 gelagert sind, die in ihrer Mitte eine Prägewalze 7 trägt. Diese Prägewalze 7 weist eine Prägeoberfläche 8 auf, die von Poren durchsetzt sein kann (nicht dargestellt), welche in die Prägeoberfläche 8 einmünden und diese mit dem Inneren der Walze verbinden.

Wie aus Fig. 1 und 2 ersichtlich, weist die Prägeoberfläche 8 – in Achsrichtung der Walze 7 gesehen – ein nichtgeradliniges Profil auf, welches mit dem Profil jenes Querschnitts des Hohlprofilstabes 3 übereinstimmt, der mit einer Prägung versehen werden soll.

In die Prägeoberfläche 8 ist das im Hohlprofilstab 3 angestrebte Muster ausgebildet.

Wie aus Fig. 1 und 2 ersichtlich, ist an der Unterseite der Prägewalze 7 in das Kalibrierdüsen-Oberteil 2 ein Fenster 11 eingearbeitet, welches möglichst genau passend zu einem Segment der Prägewalze 7 ausgebildet ist, welches in das Fenster 11 eintaucht. Das Fenster 11 ist nach unten zu dem das Hohlprofil 3 aufnehmenden Kanal offen.

Die Öffnung des Fensters 11, dessen Ausbildung und der Abstand der Achse der Prägewalze 7 von der mit der Prägung zu versehenen Oberfläche des Hohlprofilstabes 3 ist derart bemessen, dass die Prägewalze 7 mit ihrer Prägeoberfläche 8 etwas mehr als bis zur Tiefe des angestrebten Prägemusters in den zwischen den beiden Kalibrierdüsenteilen 1, 2 gebildeten Kanal eintaucht. Soweit elastisch-plastisches Material verwendet wird, welches erst nach Zurücklegen eines gewissen Federweges verformbar ist, kann die Prägewalze 7 auch tiefer in den genannten Kanal eintauchen und/oder einen grösseren Durchmesser haben.

Die Innenkontur des Fensters 11 und die Aussenkontur der Prägewalze 7 sind derart bemessen, dass der noch elastisch-plastische Kunststoff nicht durch die trennenden Spalte eingesaugt werden kann. Die Abdichtung der Spalte erfolgt durch die Oberfläche des Kunststoffstabes, die durch die Spalte hindurch – und gegebenenfalls auch durch Poren der Walze hindurch – an den Walzenumfang angesaugt wird.

Beim Betrieb der gezeigten Vorrichtung wird der Hohlprofilstab 3 durch einen nicht näher beschriebenen Antrieb durch die Kalibrierdüse 1, 2 hindurchgezogen. Hierbei greift die Profilierung der Prägewalze 7 in die zu prägende Sichtfläche des Profilstabes ein, wobei die Prägewalze 7 mitgeschleppt wird. Gleichzeitig wird das Innere des Vakuumkastens 4 evakuiert, wodurch ein inniger Ausdruck zwischen der Prägeoberfläche 8 und der mit einer Prägung zu versehenden Sichtfläche des Hohlprofilstabes 3 hergestellt wird.

Die Bewegung des Hohlprofilstabes 3 übt eine Schleppwirkung auf die Prägewalze 7 aus und lässt diese frei mitdrehen. Da diese Lagerungen 10 keinerlei Verbindung mit der Aussenseite des Vakuumkastens 4 aufweisen, können dort auch keine Leckverluste auftreten.

Bei Benutzung einer porösen Walze ist es auch möglich, auf die Luftabsaugung aus einem Vakuumkasten zu verzichten und die Luft ausschliesslich aus dem Inneren der Walze abzusaugen.

Wie aus Fig. 2 ersichtlich, weisen die Seitenbereiche der Prägeoberfläche 8, jeweils in Achsrichtung der Prägewalze 7 gesehen, eine grössere Umfangsgeschwindigkeit auf als der Mittelbereich der Prägeoberfläche 8. Dieser Unterschied in der Umfangsgeschwindigkeit verursacht einen Schlupf zwischen der Prägeoberfläche 8 und der zu prägenden Oberfläche des Hohlprofilstabes 3; dieser Schlupf wird aber durch das viskoelastische Verhalten des Materials des Hohlprofilstabes 3 aufgenommen, so dass dennoch ein sauberes, klares Prägebild in dessen Sichtfläche erzielbar ist.

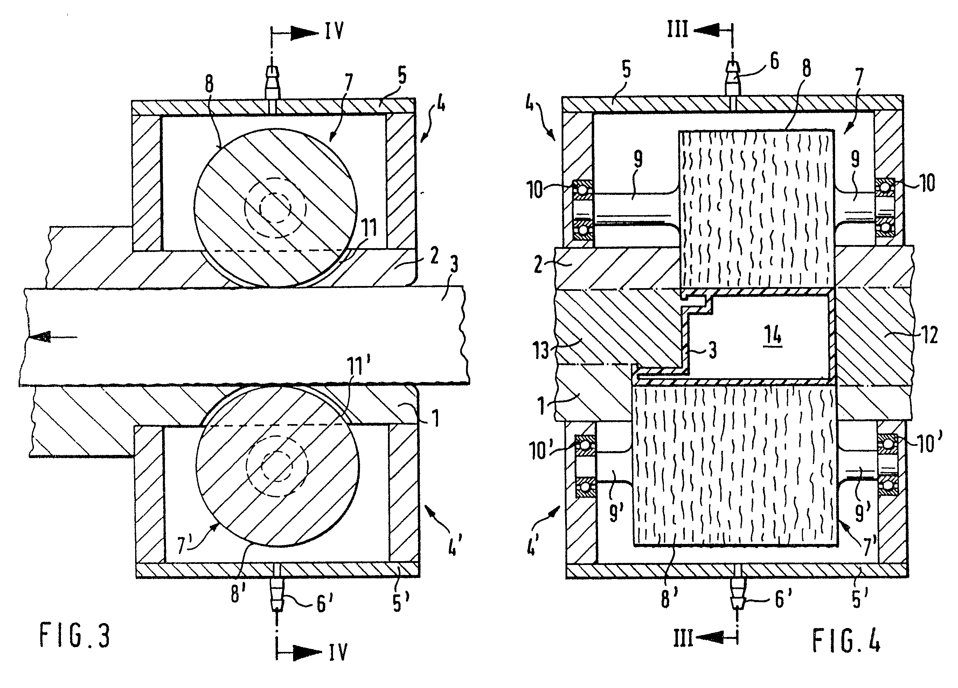

In Fig. 3 und 4 ist eine andere Ausführungsform einer Kalibrierdüse zum Prägen eines hohlen Fensterprofilstabes gezeigt, welche sich von der in Fig. 1 und 2 gezeigten im wesentlichen dadurch unterscheidet, dass auch das Kalibrierdüsen-Unterteil 1 mit einem Vakuumkasten 4' versehen ist, in welchem eine zweite Prägewalze 7' angeordnet ist.

Die Fig. 3 ist eine Darstellung des Schnitts III–III in Fig. 4, während Fig. 4 eine Darstellung des Schnitts IV–IV in Fig. 3 ist.

Der in Fig. 3 und 4 gezeigte Hohlprofilstab 3 weist zwei einander gegenüberliegende, jeweils ebene Sichtflächen auf, welche mit einer Profilierung oder Musterung, wie z.B. einer Holzmaserung, versehen werden sollen. Ausserdem weist der Hohlprofilstab 3 eine verhältnismässig komplizierte Formgebung und einen verhältnismässig grossen, nicht ausgesteiften Innenraum 14 auf.

Entsprechend der komplizierten Formgebung des Hohlprofilstabes 3 weist die Kalibrierdüse nicht nur ein Ober- bzw. Unterteil 2, 1 auf, sondern zusätzlich noch zwei Seitenteile 12, 13, von welchen jeweils eines auf einer Seite des Hohlprofilstabes angeordnet ist und mit seiner jeweiligen Innenfläche einen Kalibrierungskanal begrenzt, dessen Kontur der angestrebten Aussenkontur des Hohlprofilstabes 3 entspricht.

Die beiden Prägewalzen 7, 7' sind, wie auch bei der Ausführungsform der Fig. 1, in einem Vakuumkasten 4 nahe dem Einlauf der Kalibrierdüse 1, 2, 12, 13 angebracht. Da die zu prägende Oberfläche eben ist, weisen die beiden Prägewalzen 7, 7' jeweils eine zylindrische Prägeoberfläche 8 auf, in welche ein Prägemuster eingearbeitet ist.

Da die zu prägenden Sichtflächen des Hohlprofilstabes 3 unterschiedlich breit sind, weisen auch dementsprechend die Prägeoberflächen 8, 8' der beiden Prägewalzen 7, 7' eine unterschiedliche Breite auf.

Um die Kalibrierung bzw. Prägung des Hohlprofilstabes 3 zu verbessern, kann dessen Innenraum 14 mit einem Druckmedium gefüllt werden, welches die Aussenwände des Hohlprofilstabes 3 gegen die Innenwände der Kalibrierdüse 1, 2, 12, 13 bzw. gegen die Prägeoberflächen 8, 8' andrückt.

Die Erfindung eignet sich besonders zum Prägen dünnwandiger Hohlprofilstäbe, deren Wanddicke auch nur 1 mm oder noch weniger betragen kann.

## Patentansprüche

1. Vorrichtung zum Prägen der Oberfläche von Stabmaterial aus thermoplastischem Kunststoff in warmplastischem Zustand, mit einer Führung für das Stabmaterial, mit einem umlaufenden Prägewerkzeug, das an seiner Umfangsfläche komplementär zum gewünschten Prägemuster profiliert ist und dieses in das vorbeigeführt werdende Stabmaterial einprägt und mit einer im Bereich des Prägewerkzeugs vorgesehenen, an die Führung angrenzenden Unterdruckanordnung, die das Stabmaterial gegen das auf dem Stabmaterial ablaufende Prägemuster ansaugt, dadurch gekennzeichnet,
– dass das Prägewerkzeug als Prägewalze (7; 7') ausgebildet ist,
– dass die Prägewalze in der als Unterdruckkammer (4; 4') ausgebildeten Unterdruckanordnung drehbar gelagert angeordnet ist und
– dass ein Teil des Umfangs der Prägewalze durch ein in der Unterdruckkammer vorhandenes Fenster, an dem das Stabmaterial vorbeigeführt wird, ragt, wobei der Unterdruck das Stabmaterial an die Prägewalze andrückt.

2. Vorrichtung nach Anspruch 1, dadurch gekennzeichnet, dass die Umfangswand (8; 8') der Prägewalze (7; 7') luftdurchlässig ist und dass das Walzeninnere unter Vakuum steht.

3. Vorrichtung nach Anspruch 2, dadurch gekennzeichnet, dass die Prägewalze (7; 7') im Bereich ihrer Umfangswand (8; 8') aus porösem Material, insbesondere Sintermaterial, besteht.

4. Vorrichtung nach einem der Ansprüche 1 bis 3, dadurch gekennzeichnet, dass die Prägewalze (7; 7') zum Prägen nicht ebener Oberflächen eine entsprechend geformte Umfangsfläche (8; 8') aufweist.

5. Vorrichtung nach einem der Ansprüche 1 bis 4, dadurch gekennzeichnet, dass die Prägewalze (7; 7') antriebslos frei drehbar gelagert (Lagerungen 10; 10') ist.

**Claims**

1. Apparatus for embossing the surface of bar material of thermoplastic material in the hot plastic state, with a guide for the bar material, having a rotating embossing tool which is profiled on its circumferential surface complementarily to the embossed pattern required and impresses this in the bar material being guided past and with a reduced-pressure device which is provided in the region of the embossing tool and adjoins the guide and which draws the bar material by suction against the embossed pattern running off on the bar material, characterised in that

– the embossing tool is constructed in the form of an embossing roll (7; 7'),

– the embossing roll is mounted for rotation in the reduced-pressure device constructed in the form of a reduced-pressure chamber (4; 4') and

– part of the circumference of the embossing roll projects through a window which is present in the low pressure chamber and past which the rod material is conveyed, the reduced pressure pressing the rod material against the embossing roll.

2. Apparatus as claimed in Claim 1, characterised in that the circumferential wall (8; 8') of the embossing roll (7; 7') is permeable to air and that the interior of the roll is under vacuum.

3. Apparatus as claimed in Claim 2, characterised in that the embossing roll (7; 7') consists of porous material, particularly sintered material, in the region of its circumferential wall (8; 8').

4. Apparatus as claimed in Claims 1 to 3, characterised in that, for embossing non-plane surfaces, the embossing roll (7; 7') has a correspondingly shaped circumferential face (8; 8').

5. Apparatus as claimed in one of the Claims 1 to 4, characterised in that the embossing roll (7; 7') is mounted drivelessly and freely rotatably (bearings 10; 10').

**Revendications**

1. Dispositif pour gaufrer la surface d'un matériau en barre en une matière thermoplastique à l'état chaud et plastique, comprenant un dispositif de guidage pour le matériau en barre, un outil de gaufrage tournant qui est profilé par sa surface périphérique de façon complémentaire de celle du motif de gaufrage désiré et imprime ce dernier dans le matériau en barre qui défile contre elle et qui est muni d'une installation de dépression prévue dans la région de l'outil de gaufrage et contiguë du dispositif de guidage, laquelle installation aspire le matériau en barre contre le motif de gaufrage qui défile sur le matériau en barre, caractérisé en ce que

– l'outil de gaufrage est constitué sous forme d'un cylindre de gaufrage (7; 7'),

– le cylindre de gaufrage est monté de façon rotative dans l'installation de dépression constituée sous forme d'une chambre de dépression (4; 4') et

– une partie de la périphérie du cylindre de gaufrage passe par une fenêtre prévue dans la chambre de dépression et contre laquelle passe le matériau en barre, la dépression appliquant le matériau en barre contre le cylindre de gaufrage.

2. Dispositif selon la revendication 1, caractérisé en ce que la paroi périphérique (8; 8') du cylindre de gaufrage (7; 7') est perméable à l'air et l'intérieur du cylindre est soumis au vide.

3. Dispositif selon la revendication 2, caractérisé en ce que le cylindre de gaufrage (7; 7') est constitué dans la région de sa paroi périphérique (8; 8') en un matériau poreux, notamment un matériau fritté.

4. Dispositif selon l'une quelconque des revendications 1 à 3, caractérisé en ce que le cylindre de gaufrage (7; 7') comprend pour le gaufrage de surfaces qui ne sont pas planes une surface périphérique (8; 8') de forme correspondante.

5. Dispositif selon l'une quelconque des revendications 1 à 4, caractérisé en ce que le cylindre de gaufrage (7; 7') est monté de façon à tourner librement (paliers 10; 10') sans être entraîné.

FIG.1

FIG.2

0 092 745

FIG.3

FIG.4

0 092 745